# EUROPÄISCHE PATENTSCHRIFT

(11) **EP 3 133 020 B1**
(45) Veröffentlichungstag und Bekanntmachung des Hinweises auf die Patenterteilung: **19.12.2018**
(21) Anmeldenummer: 15174967.8
(22) Anmeldetag: 02.07.2015
(51) Int. Cl.: B64F 1/20, F21S 8/02, F21V 19/00, F21V 19/04, F21W 111/06, F21Y 115/10

(54) **VERSCHLUSSANORDNUNG**
LOCKING ASSEMBLY
DISPOSITIF DE FERMETURE

(43) Veröffentlichungstag der Anmeldung: 22.02.2017
(73) Patentinhaber: Induperm A/S, 4800 Nykøbing Falster (DK)
(72) Erfinder: Hildebrant, Alexander, 59557 Lippstadt (DE)
(74) Vertreter: Lohr, Jöstingmeier & Partner

(56) Entgegenhaltungen:
- EP-A1- 2 131 101
- WO-A1-2014/083123
- DE-A1-102008 052 869
- DE-U1- 20 205 711
- JP-A- 2003 338 204
- JP-A- 2011 129 308
- US-A1- 2004 114 355
- US-A1- 2006 072 312

## Beschreibung

Die Erfindung betrifft eine Verschlussanordnung für ein Unterflurfeuer umfassend ein Gehäuse mit einer Stützfläche und ein in das Gehäuse einsetzbares Leuchtmodul mit mindestens einer Lichtquelle und einem Lichtquellenträger, welcher in einer Montagestellung flächig an der Stützfläche des Gehäuses angelegt ist.

Unterflurfeuer werden zur Kennzeichnungen von Verkehrswegen auf Flughäfen verwendet. Typischerweise kommen insbesondere bei modernen Bauformen von Unterflurfeuern Leuchtdioden als Lichtquelle zur Anwendung. Exemplarisch zeigt die WO 2012/028562 A1 der Anmelderin ein gattungsgemäßes Unterflurfeuer. Hierbei werden die Leuchtmodule über eine Mehrzahl von Schrauben an einem Gehäuse des Unterflurfeuers befestigt. Die Art der Befestigung ist vergleichsweise aufwendig.

Aufgabe der vorliegenden Erfindung ist es, ein Unterflurfeuer konstruktiv zu vereinfachen und insbesondere die Montage der Leuchtmodule zu vereinfachen.

Zur Lösung der Aufgabe ist die Erfindung in Verbindung mit dem Oberbegriff des Patentanspruchs 1 dadurch gekennzeichnet, dass ein Haltebügel vorgesehen ist, welcher an wenigstens zwei Punkten an dem Gehäuse festgelegt ist und das Leuchtmodul formschlüssig umgreift derart, dass der Lichtträger gegen die Stützfläche angedrückt wird.

Der besondere Vorteil der Erfindung besteht darin, dass das Leuchtmodul mit einem einzigen Haltebügel an dem Gehäuse festgelegt wird. Auf das Vorsehen von Schrauben kann insofern verzichtet werden. Zugleich wird das Leuchtmodul mit einem als Teil desselben ausgeführten Lichtquellenträger gegen eine an dem Gehäuse vorgesehen Stützfläche angedrückt. Es ist insofern ein guter Wärmeübergang zu dem Gehäuse realisiert. Auf separate Kühlkörper für die Leuchtdioden kann verzichtet werden. Das Gehäuse des Unterflurfeuers wirkt als Kühlkörper und übernimmt die Wärmeabfuhr.

Aus der JP 2003-338204A ist ein Unterflurfeuer mit einem Gehäuseoberteil und einem Gehäuseunterteil bekannt. In dem Gehäuse ist ein Positionierrahmen angeordnet, an dem der Reflektor einer Halogenlampe mit einer Halteklammer befestigt ist.

In der DE 10 2008 052 869 A1 wird eine LED-Mastleuchte vorgeschlagen. Die Mastleuchte hat ein Gehäuse in dem Tragschienen angeordnet sind. An den Tragschienen werden gehäuste LEDs mit einer Halteklammer befestigt um die von dem LED erzeugte Wärme über die Tragschienen abzuführen.

Die US 2006/0072312 A1 offenbart ein Unterflurfeuer mit einem Gehäuseoberteil, einem Gehäuseunterteil und einem Leuchtmodul. Gegenüberliegende Seitenabschnitte einer Grundplatte des Leuchtmoduls sind mit Innenabschnitten des Gehäuseoberteils in flächiger Anlage, um einen verbesserten Wärmeabtransport über das Gehäuseoberteil zu erreichen.

Die WO 2014/083123 A1 lehrt, ein Leuchtmodul einer Fahrzeugleuchte mittels eines Haltebügels an einem einen Reflektor umfassenden optischen Modul der Fahrzeugleuchte festzulegen.

Nach einer Weiterbildung der Erfindung ist der Haltebügel aus einem Profilkörper gebildet, welcher elastisch verformbar ist. Vorteilhaft kann durch die Verwendung eines Profilkörpers der Haltebügel sehr kostengünstig hergestellt werden. Die elastische Verformbarkeit des Haltebügels begünstigt die Montagefähigkeit. Auf Schwenkelemente, beispielsweise Scharniere oder dergleichen kann insofern verzichtet werden.

Nach einer Weiterbildung der Erfindung wird zum Festlegen des Haltebügels an dem Gehäuse wenigstens ein freies Ende des Haltebügels in eine Aufnahmeausnehmung des Gehäuses eingesetzt. Vorteilhaft erfolgt die Positionierung des Haltebügels an dem Gehäuse in einfacher Weise durch das Vorsehen einer korrespondierend zu der Form des Haltebügels ausgebildeten Aufnahmeausnehmung. Separate Befestigungsmittel, beispielsweise Schrauben zum Festlegen der freien Enden des Haltebügels sind nicht notwendig. Die Aufnahmeausnehmungen an dem Gehäuse dienen zugleich als Positioniermitteln für den Haltebügel und das von dem Haltebügel gehaltene Leuchtmodul.

Nach einer Weiterbildung der Erfindung greift ein Halteabschnitt des Haltebügels in eine korrespondierend gestaltete Einsetzausnehmung des Gehäuses ein. Die Form des Haltebügels im Bereich des Halteabschnitts und eine Geometrie einer an der Einsetzausnehmung gebildeten Anlagefläche des Gehäuses sind so gewählt, dass der Halteabschnitt die Anlagefläche umgreift und ein Hinterschnitt gebildet ist. Vorteilhaft kann durch das Vorsehen des Hinterschnitts eine Festlegung des Leuchtmodules an dem Gehäuse in sehr einfacher Weise realisiert werden. Die Montage und Demontage des Leuchtmoduls wird insofern vereinfacht. Insbesondere zusammen mit der elastischen Verformbarkeit des Haltebügels kann auf weitere Verbindungsmittel verzichtet werden. Der Halteabschnitt des Haltebügels ist beispielsweise nach Art eines abgewinkelt beziehungsweise abgekröpft ausgebildeten Profilkörperabschnitts gebildet und aufgrund der inneren Elastizität des Haltebügels in einer Montagestellung gegen die Anlagefläche angedrückt.

Nach einer Weiterbildung der Erfindung ist beabstandet zu dem Halteabschnitt ein Betätigungshebelabschnitt als Teil des Haltebügels ausgeführt. Der Betätigungshebelabschnitt ragt in der Montagestellung von dem Gehäuse oder einem die Einsetzausnehmung aufweisenden Gehäuseteil des Gehäuses ab. Vorteilhaft kann durch das Aufprägen einer Kraft auf den beabstandet zu dem Halteabschnitt vorgesehenen Betätigungshebelabschnitt der Haltebügel elastisch verformt werden. Es vereinfacht sich insofern die Montage und Demontage des Haltebügels und das Einsetzen des Halteabschnitts in die Einsetzausnehmung, welche an dem Gehäuse gebildet ist.

Beispielsweise ist der gesamte Haltebügel durch einen drahtförmigen, schlanken Rundstahl gebildet, welcher einen konstanten Querschnitt aufweist. Eine Länge des Betätigungshebelabschnitts ist dabei auf die Geometrie der anderen Komponenten des Haltebügels so abgestimmt, dass der Haltebügel manuell elastisch verformt werden kann und eine Festlegung des Leuchtmoduls an dem Gehäuse werkzeuglos möglich ist.

Beispielsweise kann vorgesehen sein, dass der Haltebügel nach dem Montieren des Leuchtmoduls durch ein zusätzliches Sicherungsmittel an dem Gehäuse festgelegt wird. Insbesondere kann eine formschlüssige Festlegung des Haltebügels über das zusätzliche Sicherungsmittel vorgesehen sein. Als Sicherungsmittel kann insbesondere eine Schraube vorgesehen sein. Als Teil des Haltebügels kann hierbei eine Sicherungsausformung gebildet werden, durch welche ein Schraubenschaft geführt ist. Der Schraubenschaft wird zur Sicherung des Haltebügels in eine an dem Gehäuse vorgesehene Sicherungsbohrung eingeschraubt. In der Montagestellung ist dann der Haltebügel durch den Schraubenkopf gegen das Gehäuse des Unterflurfeuers angedrückt und gegen ein zufälliges, unbeabsichtigtes Lösen geschützt.

An dem Haltebügel ist insbesondere ein Anlageabschnitt gebildet, welcher in eine korrespondierend gestaltete, vorzugsweise nutförmige Aufnahme des Leuchtmoduls eingesetzt wird. Durch das Vorsehen des Anlageabschnitts und das Einsetzen desselben in die Aufnahmenut des Leuchtmodules ist eine Positionierung des Leuchtmoduls an dem Haltebügel möglich und das Leuchtmodul gegen ein unbeabsichtigtes Lösen gesichert. Bevorzugt sind mindestens zwei Anlageabschnitte an dem Haltebügel und zwei korrespondierend angeordnete nutförmige Aufnahmen an dem Leuchtmodul vorgesehen. Durch das Vorsehen von zwei korrespondierend gestalteten Anlageabschnitten beziehungsweise Aufnahmen ist das Leuchtmodul drehfest an dem Haltebügel festlegebar und ein gleichmäßiges Anpressen eines Lichtquellenträgers an eine Stützfläche des Gehäuses möglich.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigen:
- Fig. 1: ein erstes Ausführungsbeispiel eines erfindungsgemäßen Unterflurfeuers,
- Fig. 2: ein zweites Ausführungsbeispiel des erfindungsgemäßen Unterflurfeuers,
- Fig. 3: ein drittes Ausführungsbeispiel des erfindungsgemäßen Unterflurfeuers,
- Fig. 4: einen Querschnitt durch das Unterflurfeuer nach Fig. 3,
- Fig. 5: eine perspektivische Ansicht einer in dem Unterflurfeuer vorgesehenen Prismenoptik,
- Fig. 6: die Darstellung einer Montagesituation für die Prismenoptik nach Fig. 5,
- Fig. 7: einen Querschnitt durch ein Gehäuse des Unterflurfeuers mit der montierten und fixierten Prismenoptik,
- Fig. 8: eine perspektivische Ansicht eines Leuchtmoduls des Unterflurfeuers und eines zur Fixierung des Leuchtmoduls vorgesehenen Haltebügels,
- Fig. 9: eine Darstellung der Montagesituation für das Leuchtmodul nach Fig. 8,
- Fig. 10: einen Schnitt durch das Unterflurfeuer mit montierten Leuchtmodul und
- Fig. 11: eine perspektivische Unterseitenansicht auf das montierte Leuchtmodul und den Haltebügel.

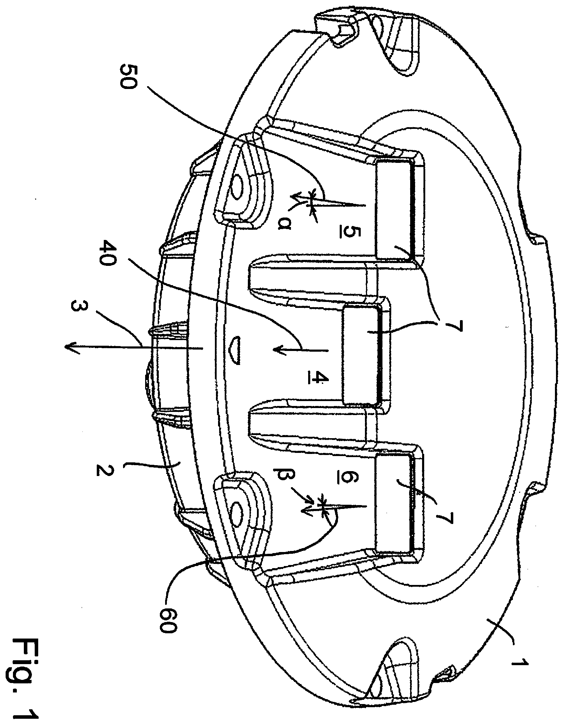

Die Fig. 1 bis 3 zeigen drei Varianten eines erfindungsgemäßen Unterflurfeuers. Jeweils sieht das Unterflurfeuer ein mehrteiliges Gehäuse mit einem Gehäuseoberteil 1 und einem Gehäuseunterteil 2 und drei in einer Hauptabstrahlrichtung 3 orientierte Lichtaustrittskanäle 4, 5, 6 vor. Die Lichtaustrittskanäle 4, 5, 6 sind an dem Gehäuseoberteil 1 vorgesehen. Das erfindungsgemäße Unterflurfeuer wird beispielsweise zur Markierung von Verkehrsflächen am Flughafen, insbesondere zur Markierung einer Start- und Landebahn verwendet. Insbesondere das Gehäuseunterteil 2 ist hierbei unterirdisch verbaut. Üblicherweise ist allein der Gehäuseoberteil 1 oberirdisch vorgesehen. Er ist typischerweise so stabil ausgeführt, dass er beschädigungsfrei von Flugzeugen oder Fahrzeugen überfahren werden kann. Gleichwohl besteht die Gefahr, dass das Unterflurfeuer beispielsweise beim Schneeräumen beschädigt wird. Insofern sind eine robuste Ausführung insbesondere mit einem Druckgussgehäuse und eine flache, kompakte Bauform von besonderer Bedeutung. Darüber hinaus muss zur Gewährleistung der Sicherheit am Flughafen das Unterflurfeuer im Falle einer Beschädigung zügig instand gesetzt und regelmäßig gewartet werden.

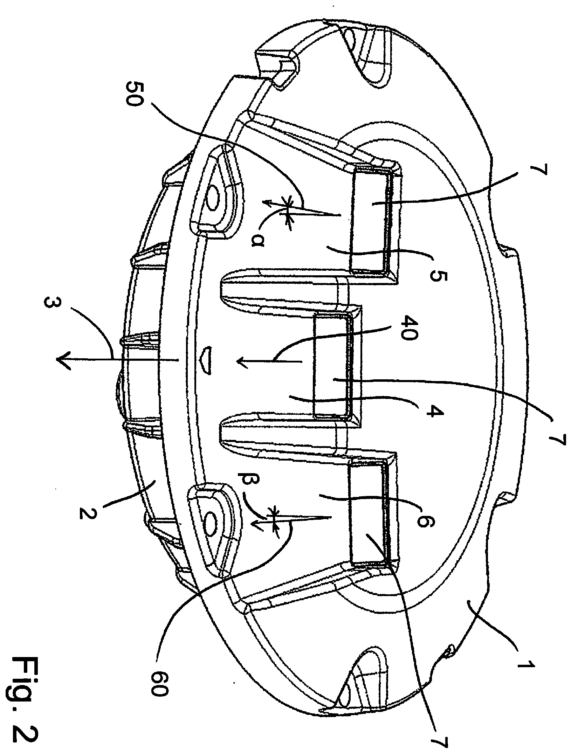

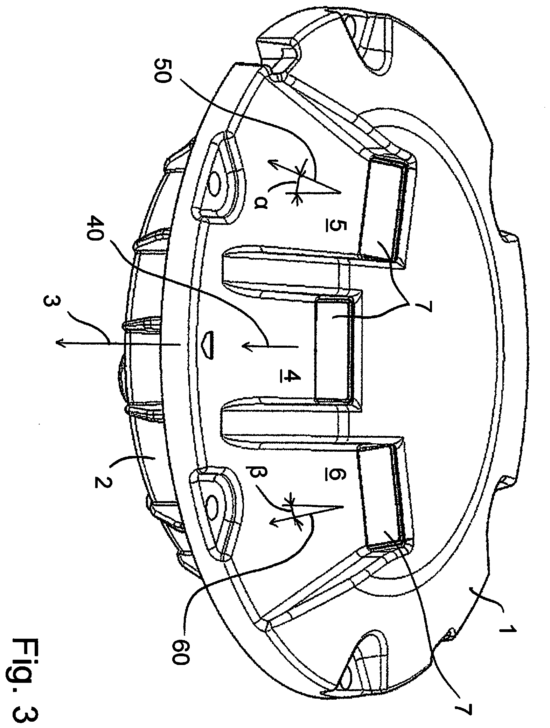

Abhängig vom jeweiligen Verwendungszweck ist die Lichtaustrittcharakteristik des Unterflurfeuers individuell gewählt. Fig. 1 zeigt ein erstes Ausführungsbeispiel des Unterflurfeuers, bei dem eine Kanallängsrichtung 40 eines mittleren Lichtaustrittskanals 4 exakt in die Hauptabstrahlrichtung 3 orientiert vorgesehen ist. Ein benachbarter linker Lichtaustrittskanal 5 ist bevorzugt auf eine Kanallängsrichtung 50 desselben um einen Winkel α von zirka 10° geneigt zur Hauptabstrahlrichtung 3 vorgesehen. Eine Kanallängsrichtung 60 eines benachbarten rechten Lichtaustrittskanal 6 ist bezogen auf die Hauptabstrahlrichtung 3 um einen Winkel β von zirka 5° geneigt vorgesehen. Insgesamt ergibt sich hierbei ein in der horizontalen Ebene kleiner Öffnungswinkel für das austretende Licht. Demgegenüber zeigen die Fig. 2 und 3 Ausführungsformen des erfindungsgemäßen Unterflurfeuers, bei dem die Neigung des linken Lichtaustrittskanals 5 und des rechten Lichtaustrittskanals 6 gegen die Hauptabstrahlrichtung 3 größer ausgewählt ist. Typischerweise liegen die Winkel α, β im Bereich von +/- 30° bezogen zur Hauptabstrahlrichtung 3, bevorzugt +/- 20° und besonders bevorzugt +/-15°. Jeweils kann die Charakteristik der Lichtabstrahlung dabei durch die Orientierung der Lichtaustrittskanäle 4, 5, 6 und zudem über die Anzahl der Lichtaustrittskanäle 4, 5, 6 eingestellt und variiert werden.

Um die vorgegebenen Lichtabstrahlcharakteristik individuell bereitstellen zu können und insbesondere eine kompakte Bauform für das Unterflurfeuer zu gewährleisten, ist bei der Realisierung von drei Lichtaustrittskanälen 4, 5, 6 oder mehr eine besonders kompakte Bauform vorteilhaft. Zudem ist ein modularer Aufbau von Vorteil, da hierdurch trotz der Variantenvielzahl Gleichteile in großer Zahl verwendet und die Kosten für das Unterflurfeuer gering gehalten werden können.

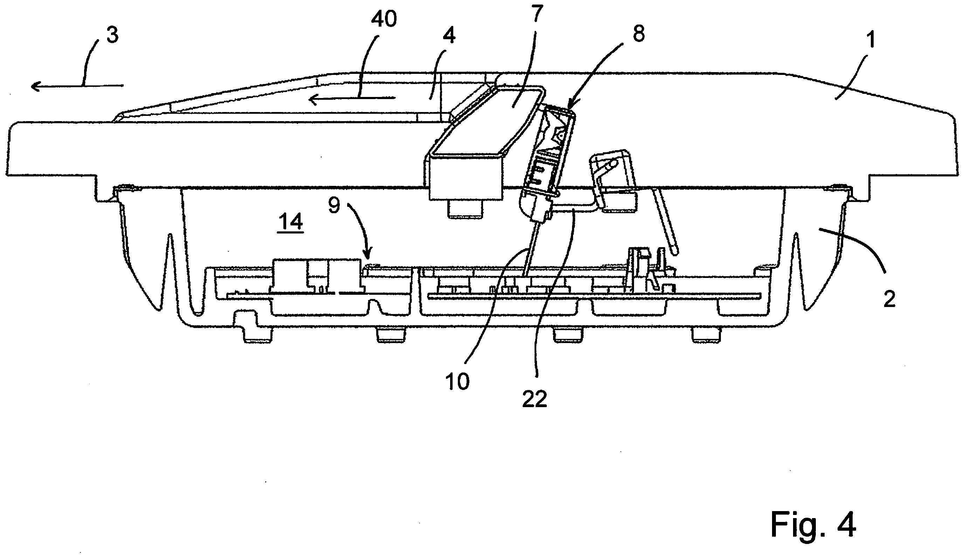

Die kompakte Bauform des erfindungsgemäßen Unterflurfeuers und der modulare Grundgedanke werden insbesondere in der Schnittdarstellung nach Fig. 4 deutlich. Gezeigt ist das gattungsgemäße Unterflurfeuer mit den wesentlichen Komponenten: dem Gehäuseoberteil 1, dem Gehäuseunterteil 2, einer in dem Gehäuseoberteil 1 vorgesehene Prismenoptik 7, einem Leuchtmodul 8, einer in dem Gehäuseunterteil 2 vorgesehenen Steuerung 9 und einem Leiter 10 zum Verbinden der Steuerung 9 mit dem Leuchtmodul 8. Von dem Leuchtmodul 8 emittiertes Licht durchscheint hierbei die in die Hauptabstrahlrichtung 3 beziehungsweise die Kanallängsrichtung 40 vorgelagert angeordnete Prismenoptik 7 und tritt über den Lichtaustrittskanal 4 aus. Die Prismenoptik 7 sowie das Leuchtmodul 8 sind nach dem gezeigten Ausführungsbeispiel der Erfindung dem Gehäuseoberteil 1 zugeordnet und an diesem festgelegt.

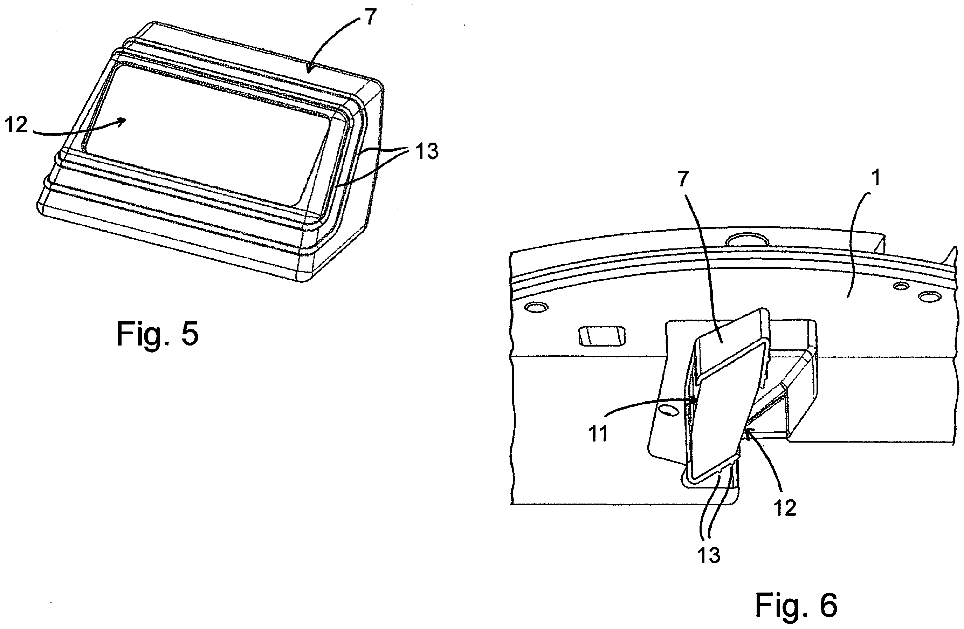

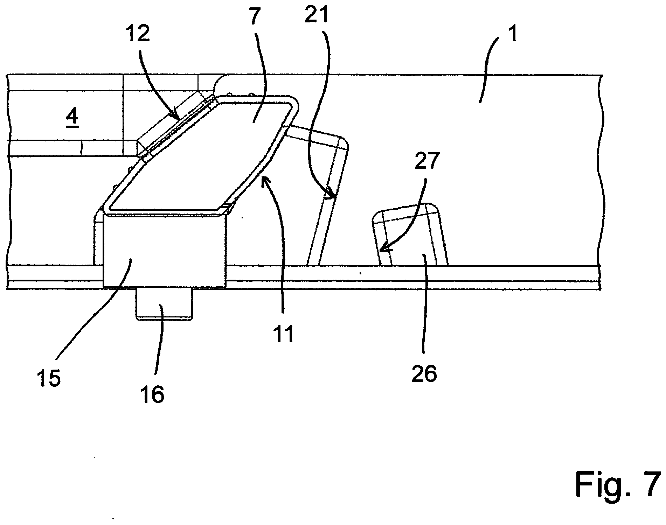

Die Fig. 5 bis 7 zeigen die Prismenoptik 7 sowie die Montage derselben in dem Gehäuseoberteil 1. Die Prismenoptik 7 weist eine Lichteintrittsfläche für das von dem Leuchtmodul 8 emittierte Licht sowie eine Lichtaustrittsfläche 12 auf. Die Lichteintrittsfläche 11 ist dem Leuchtmodul 8 zugewandt. Die Lichtaustrittsfläche 12 ist dem Lichtaustrittskanal 4 zugewandt. Die Lichtaustrittsfläche 12 ist von einer zweistufigen, umlaufenden Dichtung 13 umgeben, welche einem Eintritt von Feuchtigkeit in einen zwischen dem Gehäuseoberteil 1 und dem Gehäuseunterteil 2 gebildeten Gehäuseinnenraum 14 vorbeugt. Die Montage der Prismenoptik 7 erfolgt dabei so, dass die Dichtung 13 umlaufend an das Gehäuseoberteil 1 angelegt ist. Zur Fixierung der Prismenoptik 7 in dem Gehäuseoberteil 1 ist als Fixiermittel eine Andrückplatte 15 vorgesehen, welche über zwei Schrauben 16, 17 an dem Gehäuseoberteil 1 festgelegt ist. Es ist dabei so, dass für jede der insgesamt drei Prismenoptiken 7 ein eigenes Fixiermittel beziehungsweise eine eigene Andrückplatte 15 vorgesehen ist. Insofern ist es möglich, jede einzelne Prismenoptik 7 einzeln zu montieren beziehungsweise zu demontieren.

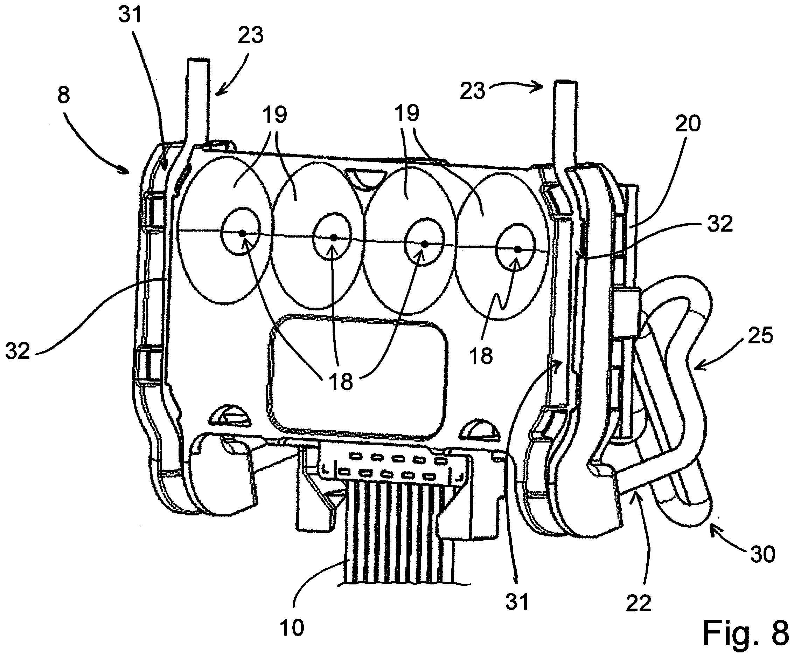

Das Leuchtmodul 8 mit dem Leiter 10 ist im Detail in Fig. 8 dargestellt. Es ist vorgesehen, dass nach dem gezeigten Ausführungsbeispiel das Leuchtmodul 8 vier in einer Reihenanordnung vorgesehene Leuchtdioden 18 als Lichtquelle mit jeweils einer der Leuchtdiode 18 zugeordneten Primäroptik 19 zum Formen des emittierten Lichts aufweist. Die Leuchtdioden 18 sind an einem gemeinsamen Lichtquellenträger 20 vorgesehen. Insgesamt ist für jeden Lichtaustrittskanal 4, 5, 6 des erfindungsgemäßen Unterflurfeuers ein eigenes Leuchtmodul 8 mit einem eigenen Lichtquellenträger 20 verwendet. Das Leuchtmodul 8 wird mit dem Lichtquellenträger 20 an eine Stützfläche 21 flächig angelegt, welche an dem Gehäuseoberteil 1 der Lichteintrittsfläche 11 der Prismenoptik 7 gegenüberliegend vorgesehen ist. Zum Festlegen des Leuchtmoduls 8 an dem Gehäuseoberteil 1 ist ein Haltebügel 22 als Fixiereinheit vorgesehen. Der Haltebügel 22 ist aus einem gebogenen Profilkörper gebildet, welcher aufgrund seiner schlanken Struktur elastisch verformbar ist.

An dem Leuchtmodul 8 sind seitlich gegenüberliegend zwei nutförmige Aufnahmen 32 vorgesehen. Der Haltebügel 22 sieht einen kompakt gestalteten Anlageabschnitt 32 vor, welcher in die Aufnahmenuten 31 eingesetzt wird zum Festlegen des Leuchtmoduls an dem Haltebügel 22.

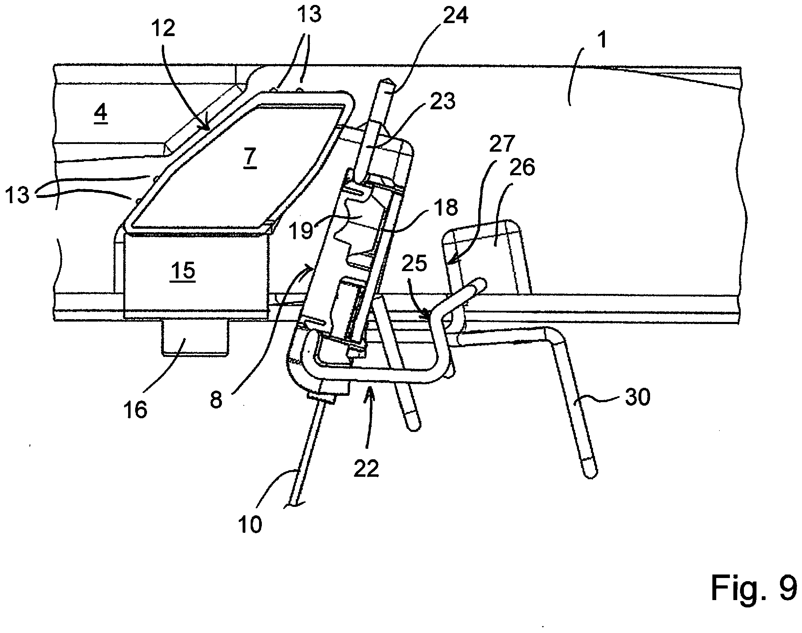

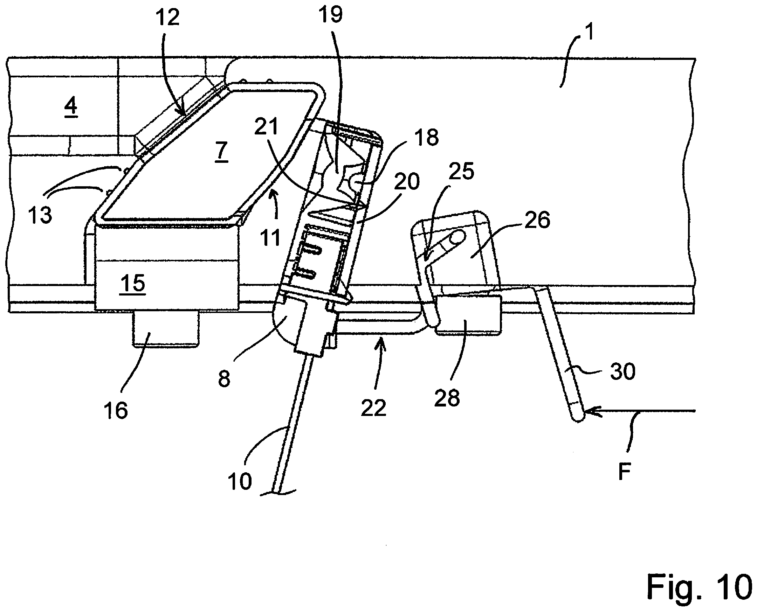

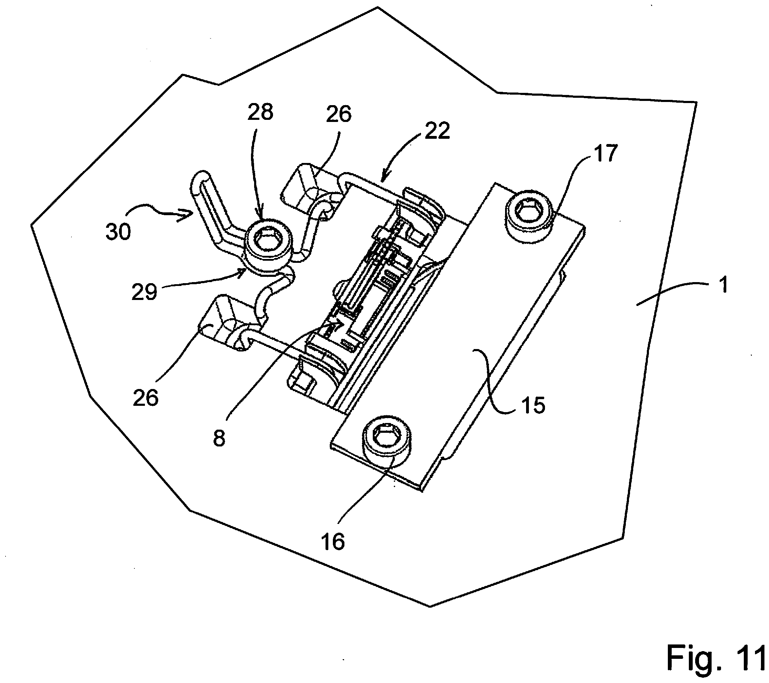

Fig. 9 zeigt die Montage des Leuchtmoduls 8. Die Fig. 10 und 11 zeigen das in dem Gehäuseoberteil 1 montierte Leuchtmodul 8.

Der Haltebügel 22 sieht zum einen zwei freie Enden 23 auf, welche auf gegenüberliegenden Querseiten des Leuchtmoduls 8 vorgesehen sind. Mit den freien Enden 23 voran wird der das Leuchtmodul 8 umgreifende Haltebügel 22 in korrespondierend gestaltete und beabstandete Aufnahmeausnehmungen 24 eingesetzt, welche an dem Gehäuseoberteil 1 vorgesehen sind. Zum Fixieren des Leuchtmoduls 8 wird der abschnittsweise abgewinkelt ausgebildete Haltebügel 22 elastisch verformt und geweitet. Infolge der elastischen Verformung kann ein abgeknöpft ausgebildeter Halteabschnitt 25 des Haltebügels 22 in eine an dem Gehäuseoberteil 1 gebildete und korrespondierend gestaltete Einsetzausnehmung 26 eingesetzt werden. Die Form des Haltebügels 22 im Bereich des Halteabschnitts 25 und eine Geometrie einer an der Einsetzausnehmung 26 gebildeten Anlagefläche 27 sind dabei so gewählt, dass der Halteabschnitt 25 die Anlagefläche 27 umgreift und ein Hinterschnitt gebildet ist. In einer montierten Stellung des Haltebügels 22 nach Fig. 10 ist das Leuchtmodul 8 insofern aufgrund des Hinterschnitts an dem Gehäuseoberteil 1 festgelegt. Als zusätzliche formschlüssige Sicherung ist eine Schraube 28 als Sicherungsmittel vorgesehen. Die Schraube 28 ist mit einem Schraubenschaft in einer an dem Gehäuseoberteil 1 vorgesehene, nicht dargestellte Sicherungsbohrung eingesetzt. Zugleich ist der Schraubenschaft durch eine an dem Haltebügel 22 gebildete Sicherungsausformung 29 geführt. Ein Schraubenkopf drückt den Haltebügel 22 dann im Bereich der Sicherungsausformung 29 gegen das Gehäuseoberteil 1. Alternativ kann vorgesehen sein, dass der Schraubenkopf den Haltebügel 22 mittelbar festlegt. Es kann dann zwischen dem Schraubenkopf und dem Haltebügel 22 beispielsweise ein Andrückkörper, insbesondere eine Unterlegscheibe, vorgesehen sein. Die Demontage des Haltebügels 22 setzt das Lösen der Schraube 28 als Sicherungsmittel voraus.

Vereinfacht wird die elastische Verformung des Haltebügels insbesondere durch das Vorsehen eines beabstandet zu dem Halteabschnitt 25 angeordneten Betätigungshebelabschnitts 30 des Haltebügels 22. Der Betätigungshebelabschnitt 30 ragt in der Montagestellung nach Fig. 10 von dem Gehäuseoberteil 1 ab. Wird er in der gezeigten Ansicht im Uhrzeigersinn mit einer Betätigungskraft F beaufschlagt, verformt sich der Haltebügel 22 elastisch und der Halteabschnitt 25 wird von der Anlagefläche 27 der Einsetzausnehmung 26 entfernt. Es ist dann möglich, den Haltebügel 22 mit dem daran festgelegten Leuchtmodul 8 in dem zur Lösung des Hinterschnitts erforderlichen Maße zu kippen und zur weiteren Demontage die freien Ende 23 des Haltebügels 22 aus Aufnahmeausnehmungen 24 zu entnehmen, welche an dem Gehäuseoberteil 1 gebildet sind.

Gleiche Bauteile und Bauteilfunktionen sind durch gleiche Bezugszeichen gekennzeichnet.

### Bezugszeichenliste

- 1: Gehäuseoberteil
- 2: Gehäuseunterteil
- 3: Hauptabstrahlrichtung
- 4: Lichtaustrittskanal
- 5: Lichtaustrittskanal
- 6: Lichtaustrittskanal
- 7: Prismenoptik
- 8: Leuchtmodul
- 9: Steuerung
- 10: Leiter
- 11: Lichteintrittsfläche
- 12: Lichtaustrittfläche
- 13: Dichtung
- 14: Gehäuseinnenraum
- 15: Andruckplatte
- 16: Schraube
- 17: Schraube
- 18: Leuchtdiode
- 19: Primäroptik
- 20: Lichtquellenträger
- 21: Stützfläche
- 22: Haltebügel
- 23: freies Ende
- 24: Aufnahmeausnehmung
- 25: Halteabschnitt
- 26: Einsetzausnehmung
- 27: Anlagefläche
- 28: Schraube
- 29: Sicherungsausformung
- 30: Betätigungshebelabschnitt
- 31: nutförmige Aufnahmen
- 32: Anlageabschnitt
- 40: Kanallängsrichtung
- 50: Kanallängsrichtung
- 60: Kanallängsrichtung
- α: Winkel
- β: Winkel
- F: Betätigungskraft

## Patentansprüche

1. Verschlussanordnung für ein Unterflurfeuer, umfassend
- ein Gehäuse eines Unterflurfeuers mit einer Stützfläche (21) und
- ein in das Gehäuse einsetzbares Leuchtmodul (8) des Unterflurfeuers mit mindestens einer Lichtquelle (18) und einem Lichtquellenträger (20), welcher in einer Montagestellung flächig an der Stützfläche (21) des Gehäuses angelegt ist,
**dadurch gekennzeichnet, dass** ein Haltebügel (22) des Unterflurfeuers an wenigstens zwei Punkten an dem Gehäuse festgelegt ist und das Leuchtmodul (8) formschlüssig umgreift derart, dass der Lichtquellenträger (20) gegen die Stützfläche (21) angedrückt wird.

2. Verschlussanordnung nach Anspruch 1, **dadurch gekennzeichnet, dass** der Haltebügel (20) aus einem elastisch verformbaren Profilkörper gebildet ist.

3. Verschlussanordnung nach Anspruch 1 oder 2, **dadurch gekennzeichnet, dass** wenigstens ein freies Ende (23) des Haltebügels (22) in eine Aufnahmeausnehmung (24) einsetzbar ist, welche an dem Gehäuse vorgesehen ist.

4. Verschlussanordnung nach Anspruch 1 bis 3, **dadurch gekennzeichnet, dass** in einer Montagestellung ein Halteabschnitt (25) des Haltebügels (22) in eine Einsetzausnehmung (26) eingreift, welche an dem Gehäuse ausgebildet ist.

5. Verschlussanordnung nach Anspruch 4, **dadurch gekennzeichnet, dass** eine Form des Haltebügels (22) im Bereich des Halteabschnitts (25) und eine Geometrie einer an dem Einsetzausnehmung (26) gebildeten Anlagefläche (27) für den Halteabschnitt (25) so gewählt ist, dass der Halteabschnitt (25) die Anlagefläche (27) umgreift und/oder an dieser anliegt und dass ein Hinterschnitt gebildet ist.

6. Verschlussanordnung nach einem der Ansprüche 4 oder 5, **dadurch gekennzeichnet, dass** beabstandet zu dem Halteabschnitt (25) ein Betätigungshebelabschnitt (30) als Teil des Haltebügels (22) ausgebildet ist, wobei der Betätigungshebelabschnitt (30) in der Montagestellung von dem Gehäuse oder einem die Einsetzausnehmung (26) aufweisenden Gehäuseteil abragt.

7. Verschlussanordnung nach Anspruch 1 bis 6, **dadurch gekennzeichnet, dass** ein Sicherungsmittel für den Haltebügel (22) vorgesehen ist und dass der Haltebügel (22) in der Montagestellung durch das Sicherungsmittel formschlüssig mit dem Gehäuse verbunden ist.

8. Verschlussanordnung nach Anspruch 1 bis 7, **dadurch gekennzeichnet, dass** als Sicherungsmittel eine Schraube (28) vorgesehen ist, wobei als Teil des Haltebügels (22) eine Sicherungsausformung (29) ausgebildet ist derart, dass in der Montagestellung ein Schraubenschaft durch die Sicherungsausformung in eine an dem Gehäuse gebildete Sicherungsbohrung eingesetzt ist und dass ein Schraubenkopf und/oder ein durch den Schraubenkopf gehaltener Andrückkörper den Haltebügel (22) im Bereich der Sicherungsausformung (29) umgreift und gegen das Gehäuse andrückt.

## Claims

1. Closure arrangement for an in-pavement light, comprising
- a housing of an in-pavement light with a support surface (21) and
- a light module (8) of the in-pavement light, the light module (8) being insertable into the housing and having at least one light source (18) and a light source carrier (20), which, in a mounting position, abuts to the support surface (21) of the housing in a planar manner,
**characterized in that** a holding bracket (22) of the in-pavement light is fixed to the housing at at least two points and encompasses the light module (8) in a positive locking manner, such that the light source carrier (20) is pressed against the support surface (21).

2. Closure arrangement according to claim 1,
**characterized in that** the holding bracket (20) is formed of an elastically deformable profile body.

3. Closure arrangement according to claim 1 or 2,
**characterized in that**
at least one free end (23) of the holding bracket (22) can be inserted into a receiving recess (24) which is provided on the housing.

4. Closure arrangement according to claim 1 to 3,
**characterized in that**
in a mounting position, a holding portion (25) of the holding bracket (22) engages in an insertion recess (26) which is formed on the housing.

5. Closure arrangement according to claim 4,
**characterized in that**
a shape of the holding bracket (22) in the region of the holding portion (25) and a geometry of a contact surface (27) formed at the insertion recess (26) for the holding portion (25) is selected such that the holding portion (25) encompasses and/or abuts against the contact surface (27) and that an undercut is formed.

6. Closure arrangement according to one of claims 4 or 5,
**characterized in that**
an actuating lever portion (30) is formed spaced from the holding portion (25) as part of the holding bracket (22), wherein the actuating lever portion (30) in the mounting position protrudes from the housing or from a housing part comprising the insertion recess (26).

7. Closure arrangement according to claim 1 to 6,
**characterized in that**
a securing means for the holding bracket (22) is provided and that the holding bracket (22) is connected in a positive locking manner to the housing in the mounting position

8. Closure arrangement according to claim 1 to 7,
**characterized in that**
a screw (28) is provided as securing means, wherein a securing recess (29) as part of the holding bracket (22) is formed such that in the mounting position, a screw shaft is inserted through the securing recess into a securing bore formed at the housing, and that a screw head and/or a pressure transmitting element held by the screw head surrounds the holding bracket (22) in the region of the securing recess (29) and presses it against the housing.

## Revendications

1. Dispositif de fermeture pour un feu de balisage encastré, comprenant
- un boîtier d'un feu de balisage encastré avec une surface d'appui (21) et
- un module d'éclairage (8) du feu de balisage encastré, qui peut être inséré dans le boîtier et qui présente au moins une source lumineuse (18) et un support de source lumineuse (20) qui, dans une position de montage, est appliqué à plat sur la surface d'appui (21) du boîtier,
**caractérisé en ce qu'**un étrier de retenue (22) du feu de balisage encastré est fixé en au moins deux points sur le boîtier et enserre le module d'éclairage (8) par complémentarité de forme de telle manière que le support de source lumineuse (20) est pressé contre la surface d'appui (21).

2. Dispositif de fermeture selon la revendication 1, **caractérisé en ce que** l'étrier de retenue (20) est formé d'un corps profilé déformable élastiquement.

3. Dispositif de fermeture selon la revendication 1 ou 2, **caractérisé en ce qu'**au moins une extrémité libre (23) de l'étrier de retenue (22) peut être insérée dans un évidement de réception (24) qui est prévu sur le boîtier.

4. Dispositif de fermeture selon les revendications 1 à 3, **caractérisé en ce que**, dans une position de montage, une partie de retenue (25) de l'étrier de retenue (22) s'engage dans un évidement d'insertion (26) qui est formé sur le boîtier.

5. Dispositif de fermeture selon la revendication 4, **caractérisé en ce qu'**une forme de l'étrier de retenue (22) dans la zone de la partie de retenue (25) et une géométrie d'une surface d'application (27) formée sur l'évidement d'insertion (26) pour la partie de retenue (25) sont choisies de telle manière que la partie de retenue (25) enserre la surface d'application (27) et/ou est appliquée contre elle et qu'une contre-dépouille est formée.

6. Dispositif de fermeture selon l'une des revendications 4 ou 5, **caractérisé en ce qu'**une partie levier d'actionnement (30) est formée en tant que partie de l'étrier de retenue (22) à distance de la partie de retenue (25), la partie levier d'actionnement (30) dépassant, dans la position de montage, du boîtier ou d'une partie de boîtier présentant l'évidement d'insertion (26).

7. Dispositif de fermeture selon les revendications 1 à 6, **caractérisé en ce qu'**un moyen de fixation est prévu pour l'étrier de retenue (22) et **en ce que**, dans la position de montage, l'étrier de retenue (22) est relié au boîtier par complémentarité de forme par le moyen de fixation.

8. Dispositif de fermeture selon les revendications 1 à 7, **caractérisé en ce qu'**une vis (28) est prévue comme moyen de fixation, un évidement de fixation (29) étant formé en tant que partie de l'étrier de retenue (22) de telle manière que, dans la position de montage, une tige de vis est introduite à travers l'évidement de fixation dans un trou de fixation formé sur le boîtier et qu'une tête de vis et/ou un élément de pression maintenu par la tête de vis enserre l'étrier de retenue (22) dans la zone de l'évidement de fixation (29) et le presse contre le boîtier.
